# EUROPÄISCHE PATENTSCHRIFT

(11) **EP 0 938 859 B1**
(45) Veröffentlichungstag und Bekanntmachung des Hinweises auf die Patenterteilung: **18.07.2001**
(21) Anmeldenummer: 98810166.3
(22) Anmeldetag: 26.02.1998
(51) Int. Cl.: A47J 39/02

(54) **Einrichtung zum Warmhalten von auf Tellern angeordneten warmen Speisen**
Arrangement for keeping warm food which is arranged on plates
Système pour tenir chaud de la nourriture arrangée sur des plateaux

(43) Veröffentlichungstag der Anmeldung: 01.09.1999
(73) Patentinhaber: Schmalz, E., Nachfolger Schmalz, Beat, 2560 Nidau (CH)
(72) Erfinder: Schmalz, Beat, 2560 Nidau (CH)
(74) Vertreter: BOVARD AG - Patentanwälte

(56) Entgegenhaltungen:
- EP-A- 0 467 000
- CH-A- 610 195
- DE-A- 2 112 517
- DE-A- 19 507 083
- US-A- 5 201 797
- PATENT ABSTRACTS OF JAPAN vol. 95, no. 6, 31.Juli 1995 & JP 07 079871 A (EBIHARA), 28.März 1995,

## Beschreibung

Die vorliegende Erfindung bezieht sich auf eine Einrichtung zum Warmhalten von auf Tellern angeordneten warmen Speisen, bestehend aus einem Heizgerät und Abdeckungen gemäss dem Oberbegriff des Patentanspruchs 1.

Insbesondere in Betrieben, in welchen in einer zentral gelegenen Küche die Mahlzeiten zubereitet werden, die dann auf Tellern angerichtet und in die verschiedenen Stationen transportiert werden müssen, wie dies beispielsweise in Altersheimen, Spitälern oder dergleichen der Fall ist, wo dann die Mahlzeiten an die einzelnen Personen verteilt werden, ist es erforderlich, den Temperaturabfall dieser warmen Speisen möglichst gering zu halten.

Hierzu sind verschiedene Möglichkeiten bekannt. Eine Möglichkeit besteht beispielsweise darin, dass die Teller, auf denen die warmen Speisen angeordnet sind, durch eine Abdeckung zugedeckt werden. Diese Abdeckungen werden in einem grossen Ofen vorgeheizt. Die so erwärmten Abdeckunger werden dann dem Ofen entnommen und auf die Teller aufgesetzt.

Diese Methode weist den Nachteil auf, dass das Aufwärmen der Abdeckungen sehr lange dauert, beispielsweise etwa zwei Stunden, während welcher der Ofen die volle Heizleistung abgeben muss. Somit ist auch der Energiebedarf sehr gross. Des weiteren weist diese Methode den Nachteil auf, da der Ofen grosse Abmessungen aufweist, dass die Teller mit den darauf angeordneten warmen Speisen im Nahbereich dieses Ofens mit den entsprechenden Abdeckungen versehen werden müssen. Ein weiterer Nachteil der so erwärmten Abdeckungen besteht darin, dass diese vollumfänglich eine erhöhte Temperatur aufweisen, so dass die jeweilige Person, die die Abdeckungen auf die Teller aufsetzt oder vom Teller abnehmen muss, mit Wärmeschutzhandschuhen arbeiten muss.

Zum Warmhalten von Speisen sind auch Methoden bekannt, bei welchen die Teller mit Zusatzelementen versehen werden können, die einen Wärmespeicher aufweisen, welcher induktiv erwärmt werden kann. Dies ist beispielsweise den Patentveröffentlichungen US-A-5 603 858 und US-A-5 611 328 entnehmbar. Mit diesen mit Wärmespeicher versehenen Tellern wird wohl erreicht, dass die darauf angeordneten warmen Speisen nicht sofort erkalten, der Wärmeverlust der Speisen ist aber trotzdem relativ gross, so dass diese Speisen nicht über einen längeren Zeitraum auf der erforderlichen Temperatur gehalten werden können.

Die gleiche Wirkung wird durch die in der EP-A-0 467 000 vgl. Oberbegriff des Anspruchs 1) darge- stellte Einrichtung erhalten. Hierbei ist der Wärmespeicher, der die Form einer Schüssel aufweist, vom Teller trennbar und separat erwärmbar. Auch hier ist der Wärmeverlust der Speisen aber ebenfalls relativ gross.

Die Aufgabe der vorliegenden Erfindung besteht nun darin, eine Einrichtung zum Warmhalten von auf Tellern angeordneten warmen Speisen zu schaffen, die aus einem einfach zu bedienenden Heizgerät besteht, mit welchem speziell darauf abgestimmte Abdeckungen erwärmt werden können, und womit die oben angegebenen Nachteile vermieden werden können.

Erfindungsgemäss erfolgt die Lösung dieser Aufgabe durch die im Anspruch 1 angegebenen Merkmale.

Dadurch können die jeweils benötigten Abdeckungen zum Zudecken der Teller in einfacher Weise und sehr rasch erwärmt werden, die benötigte Energie kann minimal gehalten werden.

In vorteilhafter Weise ist der Aufsatz über das Gehäuse des Heizgerätes vorstehend, so dass, wenn die Abdeckungen mit einem umlaufenden Kragen versehen sind und ein Innenraum gebildet wird, die jeweilige zu erwärmende Abdeckung derart auf den vorspringenden Aufsatz aufsetzbar ist, dass dieser in den Innenraum der Abdeckung hineinragt. Dadurch kann in optimaler Weise eine einfache Positionierung der Abdeckung auf dem Aufsatz erreicht werden, so dass die Innenfläche der Abdeckung optimal erwärmt werden kann.

Eine weitere vorteilhafte Ausgestaltung der Erfindung besteht darin, dass der jeweilige vorstehende Aufsatz mit einem umlaufenden Rand ausgestattet ist, der so ausgebildet ist, dass dessen nach aussen gerichtete Oberfläche im wesentlichen zu der durch den Kragen gebildeten Innenfläche der Abdeckung, wenn die Abdeckung auf den Aufsatz aufgesetzt ist, benachbart ist. Insbesondere wenn die Induktionsspule im Aufsatz so ausgebildet ist, dass sie zusätzlich zu der Aufsatzfläche auch den umlaufenden Rand abdeckt, kann die zu erwärmende Fläche der Abdeckung vergrössert werden, wodurch die Wirkung verbessert wird.

Um zu vermeiden, dass das Heizgerät eingeschaltet werden kann, wenn sich keine Abdeckung auf dem Aufsatz befindet, ist vorteilhafterweise im Bereich des jeweiligen Aufsatzes ein Sensor angeordnet, welcher beim Feststellen des Vorhandenseins einer Abdeckung auf dem Aufsatz ein Signal an die Steuerung abgibt, so dass erst dann das Heizgerät eingeschaltet werden kann.

Die einfachste und handlichste Ausführungsform eines Heizgerätes wird dann erreicht, wenn lediglich ein Aufsatz mit einer Induktionsspule vorgesehen ist. Mit einem Hochfrequenzgenerator mit einer Leistung von zirka 3 bis 5 kW kann eine entsprechende Abdeckung in zirka 6 bis 12 Sekunden auf die gewünschte Temperatur gebracht werden. Üblicherweise reicht die Kapazität zur Erwärmung von Abdeckungen zum abdecken von auszuliefernden Mahlzeiten aus. Selbstverständlich sind auch Heizgeräte denkbar, die z.B. zwei Aufsätze haben, wodurch immer jeweils zwei Abdeckungen miteinander erwärmt werden könnten.

In vorteilhafter Weise bestehen die Abdeckungen aus einer Aussenhülle, einer Innenhülle und einer dazwischen liegenden Isolationsschicht. Die Innenhülle ist mit der leitfähigen Schicht ausgestattet, die beispielsweise mit einem Hohlraum versehen werden kann, der mit einem wärmespeichernden Mittel gefüllt ist, oder ist aus einem wärmespeichernden Metall oder einer Metallegierung gebildet ist. Durch die Isolationsschicht wird gewährleistet, dass das wärmespeichernde Element die Wärme nicht nach aussen, sondern nur nach innen abgibt, wodurch der Wärmeverlust sehr gering gehalten werden kann, was gleichbedeutend ist, dass die warm zu haltenden Speisen über einen grösseren Zeitraum einen sehr geringen Temperaturabfall aufweisen.

Eine weitere vorteilhafte Ausgestaltung der Erfindung besteht darin, dass an der Aussenhülle der Abdeckung, die beispielsweise aus einem Kunststoff bestehen kann, der während des Gebrauchs der erwärmten Abdeckung kaum erwärmt wird, ein nach aussen gerichteter Handgriff angebracht ist. Somit kann die Abdeckung während des Vorgangs der Erwärmung wie auch beim Verteilen der entsprechenden Mahlzeiten durch die entsprechende Person am Handgriff ergriffen werden kann, ohne dass wärmeisolierende Handschuhe oder dergleichen erforderlich sind. Dies erleichtert den ganzen Vorgang wesentlich.

Eine Ausführungsform der Erfindung wird nachfolgend anhand der beiliegenden Zeichnung beispielhaft näher erläutert. Es zeigt:
Fig. 1 in räumlicher Darstellung ein erfindungsgemässes Heizgerät mit einem Aufsatz;
Fig. 2 eine Schnittdarstellung des Heizgerätes gemäss Fig. 1 mit einer Abdeckung; und
Fig. 3 eine Schnittdarstellung einer Abdeckung, die auf einem schematisch dargestellten Teller aufgesetzt ist.

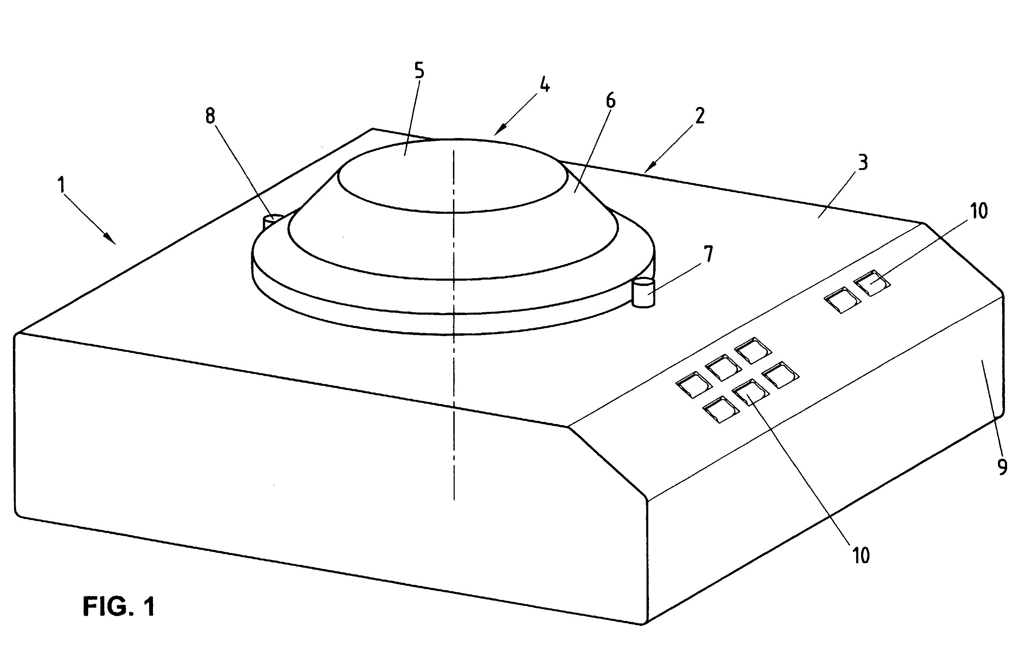

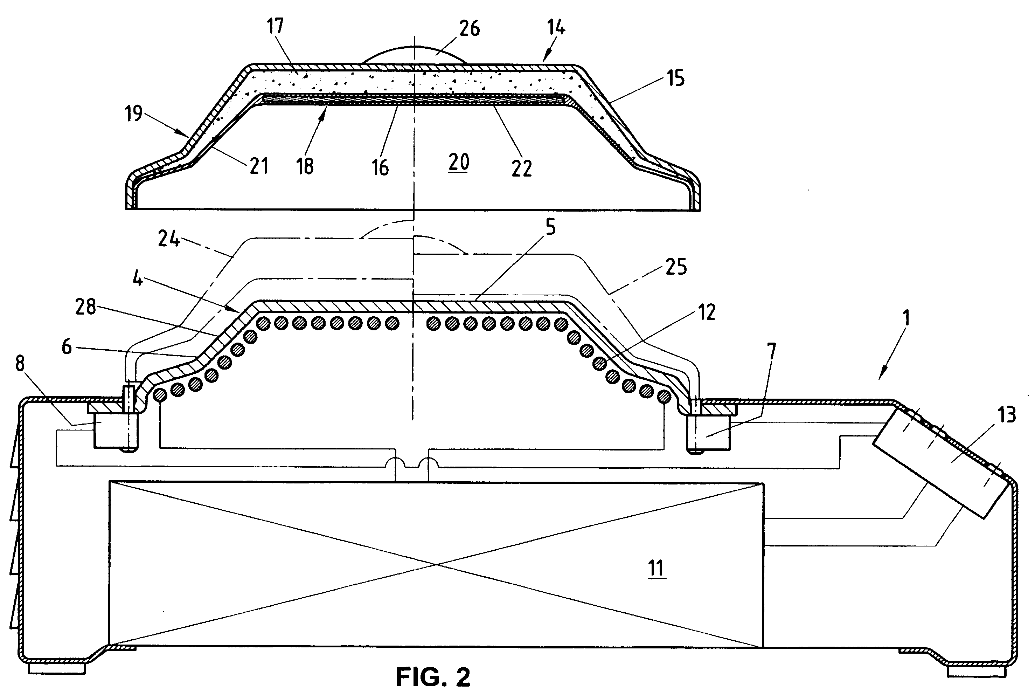

Fig. 1 zeigt ein erfindungsgemässes Heizgerät 1, welches mit einem Gehäuse 2 versehen ist. Auf dem Gehäuseoberteil 3 ist ein vorstehender Aufsatz 4 angeordnet, der aus einem nicht leitenden, temperaturbeständigen Material gebildet ist, und der mit einer Aufsatzfläche 5 versehen ist. Diese Aufsatzfläche 5 ist mit einem umlaufenden Rand 6 ausgestattet. Im Innern dieses Aufsatzes 4 ist, wie später noch beschrieben wird, eine Induktionsspule 12 (Fig. 2) angeordnet, die über einen Hochfrequenzgenerator 11 (Fig. 2) gespiesen wird.

Im Randbereich des Aufsatzes 4 sind im Gehäuseoberteil 3 zwei Sensoren 7 und 8 angeordnet, die beispielsweise als Endschalter ausgebildet sind, und deren Funktion später noch beschrieben sind. Des weiteren sind im Bereich der Frontseite 9 des Gehäuses 2 mehrere Bedienungselemente 10 angebracht, mit welchen das Heizgerät 1 in bekannter Weise geschaltet werden kann.

In Fig. 2 ist in schematischer Darstellung ein im Heizgerät 1 angeordneter Hochfrequenzgenerator 11, das als Induktionsspule 12 ausgebildete Heizelement und eine Steuereinrichtung 13 ersichtlich. Über den Hochfrequenzgenerator 11 wird durch die Induktionsspule 12 in bekannter Weise ein elektrisches Wechselfeld erzeugt. Die Induktionsspule 12 ist derartig im Aufsatz 4 angeordnet, dass sowohl die Aufsatzfläche 5 wie auch der umlaufende Rand 6 abgedeckt sind.

Oberhalb dem Aufsatz 4 ist in dieser Fig. 2 in einer Schnittdarstellung eine Abdeckung 14 dargestellt. Diese Abdeckung 14 besteht im wesentlichen aus einer Aussenhülle 15, einer Innenhülle 16 und einer dazwischen liegenden Isolationsschicht 17. Die Aussenhülle besteht in bevorzugter Weise aus einem Kunststoff, während die Innenhülle 16 aus einem wärmespeichernden Material gebildet ist, wie später noch beschrieben wird.

Die Abdeckung 14 ist mit einem umlaufenden Kragen 19 versehen. Dadurch wird ein Innenraum 20 gebildet. Sowohl die durch den Kragen gebildete Innenfläche 21 wie auch die Fläche 22 der Abdeckung 14 sind mit einer leitenden Schicht 18 versehen, die beispielsweise aus Chromnickelstahl besteht. Die Aussenhülle 15 und die Innenhülle 16 sind in deren Randbereich 23 dichtend miteinander verbunden, was beispielsweise durch eine Klebeverbindung erreicht werden kann.

Diese Abdeckung 14 kann nun auf den Aufsatz 4 des Heizgerätes aufgesetzt werden. Strichpunktiert ist linksseitig eine Position 24 dargestellt, bei welcher die Abdeckung 14 noch nicht die richtige Position für den Erwärmungsvorgang einnimmt. Der Sensor 8 ist hierbei noch nicht betätigt, was gleichbedeutend ist, dass die Induktionsspule 12 kein Wechselfeld erzeugen kann, gesteuert durch die Steuerung 13.

Auf der rechten Seite ist strichpunktiert die Position 25 dargestellt, die den richtig aufgesetzten Zustand der Abdeckung 14 auf dem Aufsatz 4 zeigt. In diesem aufgesetzten Zustand der Abdeckung 14 kommt die Fläche 22 der Abdeckung 14 benachbart zur Aufsatzfläche 5 zu liegen, die Innenfläche 21 des umlaufenden Kragens 19 ist benachbart zur durch den umlaufenden Rand 6 gebildeten Oberfläche 28 des Aufsatzes 4. Durch die aufeinander abgestimmten Formen des Aufsatzes 4 und der entsprechenden Abdeckungen 14 bleibt der Abstand der Innenhülle 16 der Abdeckungen 14 zur Induktionsspule immer etwa gleich, wodurch eine optimale Erwärmung erreichbar ist.

Der Sensor 7, selbstverständlich zusammenwirkend mit dem Sensor 8, meldet das Vorhandensein einer Abdeckung 14 an die Steuereinrichtung 13, über den Hochfrequenzgenerator 11 wird die Induktionsspule 12 angeregt, das Wechselfeld wird erzeugt, die Innenhülle 16 der Abdeckung 14 wird erwärmt.

Der Hochfrequenzgenerator weist eine Leistung von etwa 3 bis 5 kW auf, die Induktionsspule ist so ausgelegt, dass die Innenhülle 16 der Abdeckung 14 in zirka 6 bis 12 Sekunden auf 150 ° C bis 250 ° C erwärmt werden kann.

Zum Aufsetzen der Abdeckung 14 auf den Aufsatz 4 des Heizgerätes 1 ist diese mit einem Handgriff 26 versehen, der vorzugsweise an der Aussenhülle 15 der Abdeckung 14 angebracht ist. Durch die Isolationsschicht 17 ist gewährleistet, dass die in der Innenhülle 16 gespeicherte Wärme vorwiegend gegen den Innenraum 20 abgegeben wird, die Aussenhülle 15 wird somit kaum erwärmt, die Abdeckung 14 kann mittels des Handgriffs 26 auf den Aufsatz 4 aufgesetzt und erwärmt werden, und danach wieder abgenommen werden, ohne dass für die Bedienungsperson eine Verbrennungsgefahr besteht und diese beispielsweise Schutzhandschuhe tragen muss.

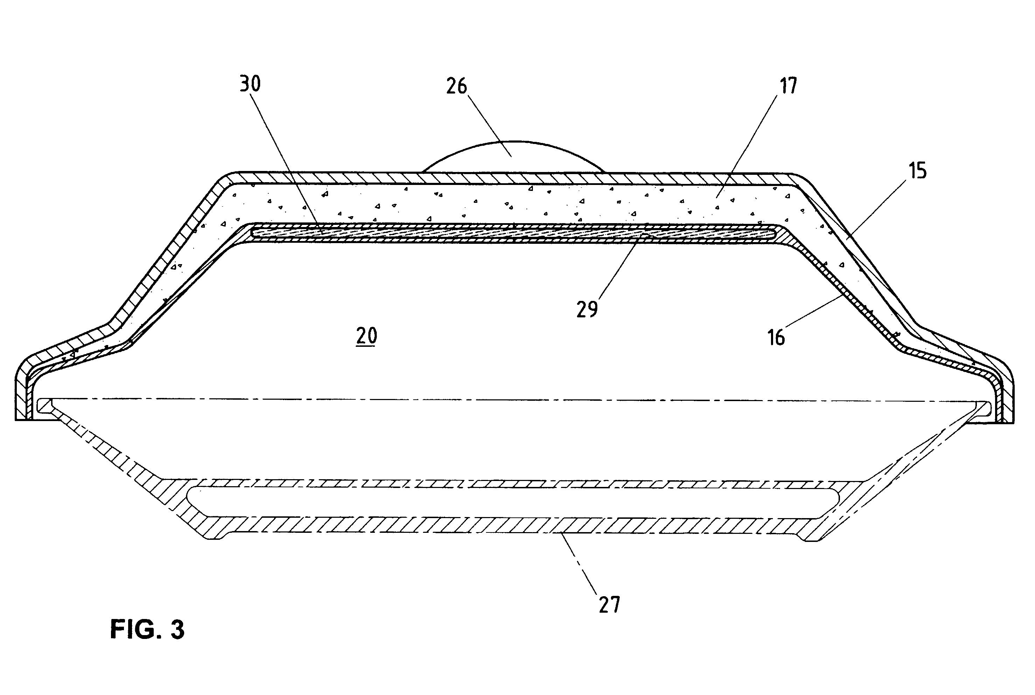

Die so erwärmte Abdeckung 14 wird anschliessend auf einen Teller 27 aufgesetzt, wie dies in Fig. 3 ersichtlich ist, wobei auf diesem Teller in bekannter, nicht dargestellter Weise die warmen Speisen angeordnet sein können. Hierbei kann jede Art von Tellern verwendet werden, beispielsweise auch solche, die in bekannter Weise ebenfalls mit einem Wärmespeicher ausgestattet sind, und die ebenfalls vorgewärmt sein können.

Wie bereits erwähnt, besteht die Abdeckung 14 aus einer Aussenhülle 15, einer Innenhülle 16 und einer dazwischen liegenden Isolationsschicht 17. Die Innenhülle 16 kann beispielsweise aus einem wärmespeichernden Metall oder einer Metallegierung, insbesondere auf Aluminiumbasis gebildet sein. Denkbar ist auch, die Innenhülle 16 aus einem wärmespeichernden magnetisierbaren Kunststoff oder einem anderen geeigneten wärmespeichernden Material zu bilden. Wie in Fig. 3 dargestellt ist, kann die Innenhülle 16 aber auch mit einem Hohlraum 29 versehen sein, der durch ein wärmespeicherndes Mittel 30, beispielsweise Wachs, gefüllt ist. Diese wärmespeichernden Materialien bzw. Mittel können über einen längeren Zeitraum gespeicherte Wärme in den durch die Abdeckung 14 und den Teller 27 gebildeten Innenraum 20 abgeben, die auf dem Teller angeordneten warmen Speisen bleiben somit ebenfalls während einer längeren Zeitdauer oberhalb einer bestimmten Temperatur, zum Beispiel 65 ° C, so dass die Mahlzeiten auch nach einem längeren Transportweg in einwandfreiem Zustand an die entsprechenden Personen abgegeben werden können.

## Patentansprüche

1. Einrichtung zum Warmhalten von auf Tellern angeordneten warmen Speisen, bestehend aus einem Heizgerät (1) und aus Abdeckungen (14), die jeweils mindestens einen Bereich aufweisen, der aus einem wärmespeichernden Mittel gebildet ist, welches Heizgerät (1) ein Gehäuse (2) umfasst, in welchem ein Hochfrequenzgenerator (11), mindestens eine mit diesem Hochfrequenzgenerator (11) verbundenen Induktionsspule (12), eine Steuereinrichtung (13) und Bedienungselemente (10) angeordnet sind, und die mindestens eine Induktionsspule (12) in mindestens einen in das Gehäuse (1) eingesetzten Aufsatz (4) eingesetzt ist, auf welchen jeweils eine Abdeckung (14) aufsetzbar ist, die mit einer leitenden Fläche (22) versehen ist, die in Wirkverbindung mit der Induktionsspule (12) gelangt, während welcher die Abdeckung (14) erwärmbar ist und im erwärmten Zustand auf jeweils einen mit den warmen Speisen versehenen Teller (27) aufsetzbar ist, dadurch gekennzeichnet, dass der jeweilige Aufsatz (4) über das Gehäuse (2) des Heizgerätes (1) vorstehend ist, aus einem nicht leitenden, temperaturbeständigem Material gebildet ist und mit einer Aufsatzfläche (5) versehen ist, die im wesentlichen der leitenden Fläche (22) einer Abdeckung (14) entspricht, dass jede Abdeckung (14) mit einem umlaufenden Kragen (19) versehen ist, wodurch ein Innenraum (20) gebildet wird, und dass die jeweilige zu erwärmende Abdeckung (14) derart auf den vorspringenden Aufsatz (4) aufsetzbar ist, dass dieser in den Innenraum (20) der Abdeckung (4) hineinragt und die Aufsatzfläche (5) und die Fläche (22) der Abdeckung (14) im auf den Aufsatz (4) aufgesetzten Zustand der Abdeckung (14) benachbart sind.

2. Einrichtung nach Anspruch 1, dadurch gekennzeichnet, dass der jeweilige vorstehende Aufsatz (4) mit einem umlaufenden Rand (6) ausgestattet ist, der so ausgebildet ist, dass dessen nach aussen gerichtete Oberfläche (28) im wesentlichen zu der durch den umlaufenden Kragen (19) gebildeten Innenfläche (21) der Abdeckung (14), wenn die Abdeckung (14) auf den Aufsatz (4) aufgesetzt ist, benachbart ist.

3. Einrichtung nach Anspruch 2, dadurch gekennzeichnet, dass die Induktionsspule (12) in jedem Aufsatz (4) so ausgebildet ist, dass sie zusätzlich zu der Aufsatzfläche (5) auch den umlaufenden Rand (6) abdeckt.

4. Einrichtung nach einem der Ansprüche 1 bis 3, dadurch gekennzeichnet, dass im Bereich des jeweiligen Aufsatzes (4) im Heizgerät (1) mindestens ein Sensor (7, 8) angeordnet ist, welcher beim Feststellen des Vorhandenseins einer Abdeckung (14) auf dem jeweiligen Aufsatz (4) ein Signal an die Steuereinrichtung (13) abgibt und der Hochfrequenzgenerator (11) aktivierbar ist.

5. Einrichtung nach einem der Ansprüche 1 bis 4, dadurch gekennzeichnet, dass in jedem Heizgerät (1) ein Aufsatz (4) mit einer Induktionsspule (12) angebracht ist.

6. Einrichtung nach einem der Ansprüche 1 bis 5, dadurch gekennzeichnet, dass die Abdeckungen (14) aus einer Aussenhülle (15), einer Innenhülle (16) und einer dazwischenliegenden Isolationsschicht (17) zusammengesetzt ist, dass die Innenhülle (16) mit einer leitfähigen Schicht (18) ausgestattet ist und dass die Innenhülle (16) und die Aussenhülle (15) in deren Randbereich dichtend miteinander verbunden sind.

7. Einrichtung nach Anspruch 6, dadurch gekennzeichnet, dass die Innenhülle (16) mit einem Hohlraum (29) versehen ist, der mit einem wärmespeichernden Mittel (30) gefüllt ist.

8. Einrichtung nach Anspruch 6 oder 7, dadurch gekennzeichnet, dass die Innenhülle (16) aus einem wärmespeichernden Metall oder Metallegierung gebildet ist.

9. Einrichtung nach einem der Ansprüche 6 bis 8, dadurch gekennzeichnet, dass an der Aussenhülle (15) der Abdeckung (14) ein nach aussen gerichteter Handgriff (26) angebracht ist.

## Revendications

1. Dispositif servant à maintenir la chaleur d'aliments chauds disposés sur des assiettes, constitué par un appareil chauffant (1) et des recouvrements (14) qui possèdent chacun au moins un domaine constitué par une substance accumulatrice de chaleur, cet appareil chauffant (1) comprenant une enveloppe (2) dans laquelle se trouvent un générateur haute fréquence (11), au moins une bobine d'induction (12) reliée à ce générateur haute fréquence (11), un dispositif de commande (13) et des organes de commande (10) et dans laquelle est montée au moins une bobine d'induction (12) dans au moins un élément supérieur (4) placé dans l'enveloppe (2), sur lequel un recouvrement (14) pour chacun peut être mis en place, pourvu d'une surface conductrice (22) qui se met à agir de concert avec la bobine d'induction (12) ; pendant qu'il en est ainsi, le recouvrement (14) peut être chauffé et placé, pendant qu'il est chaud, sur une assiette (27) contenant les aliments chauds, caractérisé en ce que chaque élément supérieur (4) forme une saillie sur l'enveloppe (2) de l'appareil chauffant (1), est fait d'une matière résistant à la chaleur et non conductrice et présente une surface supérieure (5) qui correspond sensiblement à la surface conductrice (22) d'un recouvrement (14), en ce que chaque recouvrement (14) est pourvu d'un rebord (19) qui fait le tour, ce qui forme un espace intérieur (20), et en ce que chaque recouvrement (14) à réchauffer considéré peut être placé sur l'élément supérieur (4) en saillie de telle manière que celui-ci pénètre dans l'espace intérieur (20) du recouvrement (14) et que la surface supérieure (5) et la surface (22) du recouvrement (14) sont voisins quand le recouvrement (14) est en place sur l'élément supérieur (4).

2. Dispositif selon la première revendication, caractérisé en ce que l'élément supérieur (4) en saillie considéré est pourvu d'un bord (6) qui fait le tour et qui est réalisé de telle manière que sa surface tournée vers l'extérieur (28) soit sensiblement voisine de la surface intérieure (21) du recouvrement (14) formée par le rebord (19) faisant le tour quand le recouvrement (14) est placé sur l'élément supérieur (4).

3. Dispositif selon la revendication 2, caractérisé en ce que la bobine d'induction (12) est réalisée, dans chaque élément supérieur (4), de telle manière que, outre la surface supérieure (5), elle recouvre le bord (6) qui fait le tour.

4. Dispositif selon l'une des revendications 1 à 3, caractérisé en ce qu'au moins un capteur (7, 8) est placé dans l'appareil chauffant (1) près de l'élément supérieur (4) considéré et, lorsqu'il détecte la présence d'un recouvrement (14) sur l'élément supérieur (4) considéré, envoie un signal au dispositif de commande (13) et le générateur haute fréquence (11) peut être mis en marche.

5. Dispositif selon l'une des revendications 1 à 4, caractérisé en ce qu'un élément supérieur (4), avec une bobine d'induction (12), est monté dans chaque appareil chauffant (1).

6. Dispositif selon l'une des revendications 1 à 5, caractérisé en ce que les recouvrements (14) sont constitués par une enveloppe extérieure (15), une enveloppe intérieure (16) et une couche isolante intermédiaire (17), en ce que l'enveloppe intérieure (16) est pourvue d'une couche conductrice (18) et que l'enveloppe intérieure (16) et l'enveloppe extérieure (15) sont fixées l'une à l'autre, dans leur partie périphérique, d'une manière assurant l'étanchéité.

7. Dispositif selon la revendication 6, caractérisé en ce que l'enveloppe intérieure (16) comporte une cavité (29) remplie d'une substance accumulatrice de chaleur (30).

8. Dispositif selon la revendication 6 ou 7, caractérisé en ce que l'enveloppe intérieure (16) est constituée par un métal ou un alliage métallique accumulateur de chaleur.

9. Dispositif selon l'une des revendications 6 à 8, caractérisé en ce qu'une poignée dirigée vers l'extérieur (26) est montée sur l'enveloppe extérieure (15) du recouvrement (14).

## Claims

1. Device for keeping food, disposed on plates, warm, comprising a heating device (1) and covers (14), which each have at least one area that is formed by a heat accumulating means, which heating device (1) comprises a housing (2) in which a high frequency generator (11), at least one induction coil (12) connected to this high frequency generator (11), a control device (13) and operating elements (10) are disposed, and the at least one induction coil (12) is installed in a cap (4) inserted in the housing, on which a cover (14) is placeable in each case, which cover is provided with a conducting surface (22), which comes into operational connection with an induction coil (12), during which the cover (14) is heatable and in the heated state is capable of being put on a plate (27) in each case, provided with the warm food, characterised in that the respective cap (4) projects beyond the housing (2) of the heating device (1), is made of a non-conducting, temperature-stable material, and is provided with a cap surface (5) corresponding substantially to the conducting surface (22) of a cover (14), in that each cover (14) is provided with an encircling collar (19), whereby an interior space (20) is formed, and in that each cover (14) to be heated is capable of being put on the projecting cap (4) in such a way that the latter protrudes into the interior space (20) of the cover (14) and the cap surface (5) and the surface (22) of the cover (14) are adjacent in the state of the cover (14) put on the cap (4).

2. Device according to claim 1, characterised in that the respective projecting cap (4) is provided with an encircling rim (6) which is designed in such a way that its outwardly directed surface (28) is adjacent to the inner surface (21), formed by the encircling collar (19), of the cover (14) when the cover (14) is put on the cap (4).

3. Device according to claim 2, characterised in that the induction coil (12) in each cap (4) is designed in such a way that it also covers the encircling rim (6) in addition to the cap surface (5).

4. Device according to one of the claims 1 to 3, characterised in that at least one sensor (7, 8) is disposed in the heating device (1) in the area of each cap (4), which sensor emits a signal to the control device (13) upon detection of the presence of a cover (14) on the respective cap (4), and the high frequency generator is able to be activated.

5. Device according to one of the claims 1 to 4, characterised in that a cap (4) with an induction coil (12) is installed in each heating device (1).

6. Device according to one of the claims 1 to 5, characterised in that the covers (14) is *<sic.* are> made up of an outer shell (15), an inner shell (16) and an insulation layer (17) situated there-between, in that the inner shell (16) is provided with a layer (18) capable of conduction, and in that the inner shell (16) and the outer shell (15) are connected together in a sealed way in their edge area.

7. Device according to claim 6, characterised in that the inner shell (16) is provided with a hollow space (29), which is filled with a heat storage means.

8. Device according to claim 6 or 7, characterised in that the inner shell (16) is made of a heat-accumulating metal or metal alloy.

9. Device according to one of the claims 6 to 8, characterised in that an outwardly directed handle (26) is installed on the outer shell (15) of the cover (14).
